(19) Europäisches Patentamt
European Patent Office
Office européen des brevets

(11) EP 1 766 868 B1

(12) **EUROPEAN PATENT SPECIFICATION**

(45) Date of publication and mention
of the grant of the patent:
**23.08.2017 Bulletin 2017/34**

(51) Int Cl.:
***H04L 1/00*** *(2006.01)*

(21) Application number: **05762673.1**

(86) International application number:
**PCT/US2005/022051**

(22) Date of filing: **22.06.2005**

(87) International publication number:
**WO 2006/002232 (05.01.2006 Gazette 2006/01)**

(54) **SYSTEM AND METHOD FOR DETECTING INGRESS IN A SIGNAL TRANSMISSION SYSTEM**

SYSTEM UND VERFAHREN ZUR ERKENNUNG VON EINGANG IN EINEM SIGNALÜBERTRAGUNGSSYSTEM

SYSTEME ET PROCEDE POUR DETECTER UN CAPTAGE DANS UN SYSTEME DE TRANSMISSION DE SIGNAUX

(84) Designated Contracting States:
**DE FR GB IT NL**

(30) Priority: **22.06.2004 US 873804**

(43) Date of publication of application:
**28.03.2007 Bulletin 2007/13**

(73) Proprietor: **Cisco Technology, Inc.**
**San Jose, CA 95134 (US)**

(72) Inventor: **WALL, William E.**
**Atlanta, GA 30307 (US)**

(74) Representative: **Mathys & Squire LLP**
**The Shard**
**32 London Bridge Street**
**London SE1 9SG (GB)**

(56) References cited:
**US-A1- 2002 090 909     US-B1- 6 711 135**

• **YVO L.C DE JONG & CO: "A CDMA Based Bidirectional Communication System for Hybrid Fiber.Coax CATV Networks" IEEE TRANSACTIONS ON BROADCASTING, vol. 43, no. 2, 1 June 1997 (1997-06-01), XP002343315**

**Description**

## FIELD OF INVENTION

The present invention is generally related to transmission and receipt of signals, and, more particularly, is related to a system and method for identifying a source of ingress in systems for signal transmission and reception.

## BACKGROUND

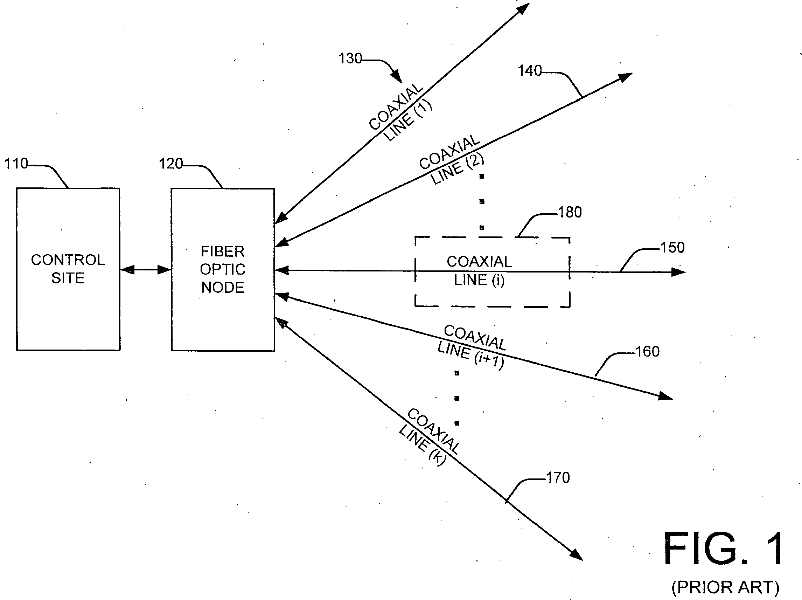

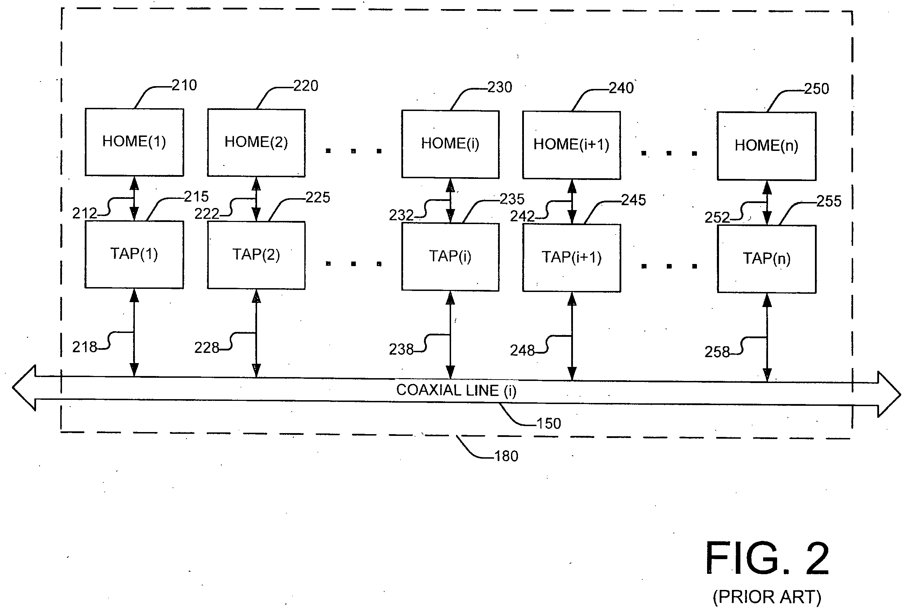

In a system for transmitting and receiving signals, ingress is defined as an undesired signal that leaks into the system thereby corrupting or degrading system integrity. One particular problem related to ingress arises when multiple signals are being concurrently transmitted and received in a system. FIGS. 1 and 2 are provided to better illustrate the problem. FIG. 1 is a block diagram of one example hybrid-fiber-optic/coaxial network (HFC) environment in which such a problem may arise, and FIG. 2 is an exploded view of one coaxial line in the environment of FIG. 1. In the network of FIGS. 1 and 2, a control site 110 is connected to a fiber-optic node 120 that interfaces the control site 110 to a plurality of coaxial lines 130, 140, 150, 160, 170. Each coaxial line (e.g., coaxial line *i* 150) further has a plurality of taps 215, 225, 235, 245, 255 that are each connected to a home 210, 220, 230, 240, 250 or other signal source. As seen from this example configuration, the number of signal sources could easily exceed several thousand. In the upstream direction (from the home to the headend) signals from each home are additive so that a combined signal is received at the headend. Thus, when all of the signals from each of the homes 210, 220, 230, 240, 250 are added in the coaxial line 150, and each of the added signals in each of the coaxial lines 130, 140, 150, 160, 170 are further added at the fiber optic node 120, then the composite signal that arises from the linear adding of each of the signals may appear very complex. Given this environment, if ingress exists at one of these signal sources, it becomes a daunting task to identify the source of ingress because the disturbance due to ingress is buried within the composite signal.

Several systems and methods exist to identify sources of ingress in such a system. In one known method, the control site 110 attempts to identify the source of ingress by sequentially interrupting the transmission of information from each of the source sites (*i.e.,* homes). This method, known as "winking," selects one source site and stops transmission from the selected site, thereby altering the composite signal so that the composite signal does not contain the signal from the selected site. The control site 110 then examines the modified composite signal to determine whether ingress problems are still manifest in the modified composite signal. If the ingress problem has disappeared, then the selected site is identified as the source of ingress. If, on the other hand, the ingress problem persists, then the control site 110 determines that the selected site was not the source of ingress and selects another site for interruption. This procedure is sequentially repeated for every source site until the source of ingress has been determined.

Several limitations exist with winking. First, the interruption mechanism is a destructive mechanism in which no signal from the selected source may be transmitted during this interruption period. Second, since each of the source sites are sequentially interrupted, the process of identifying the source of ingress may be very time consuming, depending on the number of source sites that need to be interrupted. Third, if multiple sources of ingress exist, then identification of one source will not eliminate the corruption or degradation of the composite signal since other ingress sources will continue to corrupt the composite signal. Finally, since it would take so long to sequentially "wink" each source site, intermittent problems may never be identifiable because, in order to identify such problems, the ingress, the selected interruption site, and the time of interruption would have to coincide for that source to be identified.

Therefore, a need exists in the industry for a system and method for detecting ingress that does not possess the aforementioned limitations.

Reference may be made to US 2002/0090909 which describes a hybrid/fiber coax video and telephony communication system with poly-phase filtering. The head end terminal includes a multicarrier modem adapted to receive upstream signals and to demodulate the upstream signals modulated on a plurality of orthogonal carriers in a first frequency bandwidth, the multicarrier modem including a polyphase filter adapted to selectively filter the received upstream signal to provide protection against narrowband ingress for the modulated orthogonal carriers and allow for scalable bandwidth usage in the upstream transmission, and a controller operatively connected to the multicarrier modem for controlling receipt of signals. The headend controls channel allocation of orthogonal carriers to each upstream modem, and the polyphase filter selectively filters out narrowband noise ingress.

Reference may also be made to YVO L.C. DE JONG & CO: "A CDMA Based Bidirectional Communication System for Hybrid Fiber Coax CATV Networks", IEEE Transactions on Broadcasting, vol. 43, no. 2, 1 June 1997, XP002343315.

## Summary of the Invention

The present invention is defined in the claims.

## BRIEF DESCRIPTION OF THE DRAWINGS

Many aspects of the invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.

FIG. 1 is a block diagram showing a prior art environment comprising a plurality of coaxial lines.

FIG. 2 is a block diagram showing an exploded view of one of the plurality of coaxial lines of FIG. 1.

FIG. 3 is a block diagram showing an example environment having encoding taps configured to mark the signals that pass through the encoding taps.

FIG. 4 is an exploded view of one encoding tap of FIG. 3 showing several relevant components associated with the encoding tap.

FIG. 5 is a block diagram showing relevant components of an attenuator of FIG. 4 configured to selectively attenuate portions of a signal.

FIG. 6 is an exploded view of the signal of FIG. 5 in a code envelope that is generated by circuit of FIG. 5.

FIG. 7 is an exploded view of the headend of FIG. 3 showing several relevant components associated with the headend.

FIG. 8 is an exploded view of the memory block of FIG. 7 showing an m-word digitized spectrum as a matrix.

FIG. 9 is an exploded view of the n-code generator of FIG. 7 showing a plurality of m-word codes as a matrix.

FIG. 10 is an exploded view of the correlator of FIG. 7 showing, as a non-limiting example, a statistical correlation function.

FIG. 11 is an exploded view of the criteria engine of FIG. 7 showing a comparator and a code look-up table associated with the criteria engine.

FIG. 12 is a flow chart showing relevant functions associated with the encoding tap of FIG. 3.

FIG. 13 is a flow chart showing relevant functions associated with the headend of FIG. 3.

FIG. 14 is a flow chart showing relevant functions associated with the correlator of FIGS. 7 and 10.

FIG. 15 is a flow chart showing relevant functions associated with the criteria engine of FIGS. 7 and 11.

FIG. 16 is a flow chart showing relevant functions associated with the comparator of FIG. 11.

FIG. 17 is a flow chart showing relevant functions associated with the code look-up table of FIG. 11.

## DETAILED DESCRIPTION OF DRAWINGS

Reference will now be made in detail to the description of the invention as illustrated in the drawings. While the invention will be described in connection with these drawings, there is no intent to limit it to the embodiment or embodiments disclosed herein. On the contrary, the intent is to cover all alternatives, modifications, and equivalents included within the scope of the invention as defined by the appended claims.

System

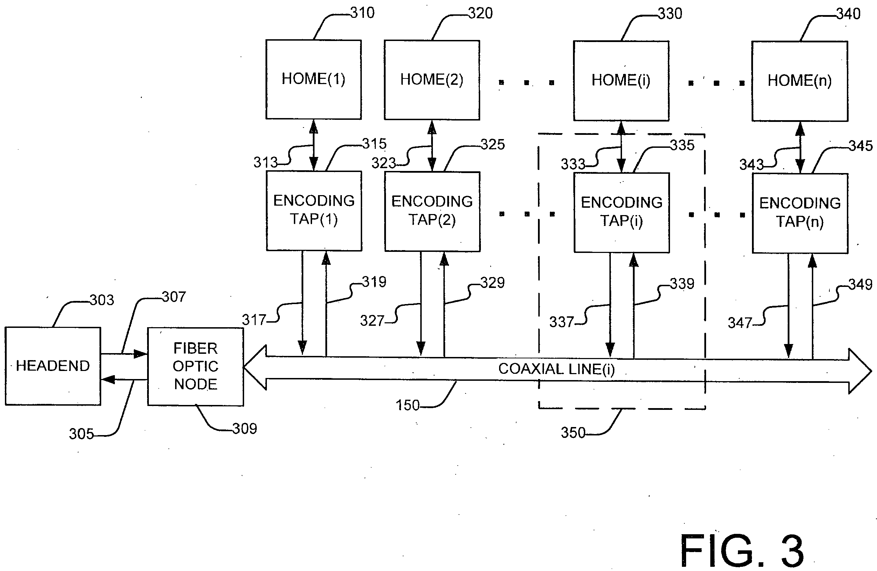

FIGS. 3 through 11 are block diagrams that show relevant components associated with one embodiment of the system. These figures are provided solely for the purposes of illustration in order to better teach and enable one of ordinary skill in the art to make and practice the invention. The specification is not intended to limit the scope of the invention, but, rather, the claims that follow the specification are intended to define the scope of the invention.

FIG. 3 is a block diagram showing an example environment having encoding taps 315, 325, 335, 345 configured to mark the signals that pass through the encoding taps 315, 325, 335, 345. As shown in FIG. 3, one example environment, among others, may be seen as a hybrid fiber-optic/coaxial (HFC) network comprising a headend 303 having a bi-directional communications link 305, 307 to a fiber optic node 309, which, in turn, is connected to at least one coaxial line 150. In one embodiment, this bi-directional communications link 305, 307 is configured to allow transfer of information from the headend 303 to the fiber optic node 309, and vice versa, using one set of frequencies in one direction and a second set of frequencies in the other direction. Additionally, the coaxial line 150 is configured to relay information to and from the fiber optic node 309. Thus, the backbone of the system is configured to relay information on a coaxial line 150 to a headend 303, and, in reverse, relay information from the headend 303 to the coaxial line 150. While only one coaxial line 150 is shown for illustrative purposes, it will be clear to one of ordinary skill in the art that multiple coaxial lines may be connected to the fiber optic node 309, and that the following description may be extended to a plurality of coaxial lines. In any event, the coaxial line 150 is further connected to a plurality of taps 315, 325, 335, 345 using bi-directional communications pathways 317, 319, 327, 329, 337, 339, 347, 349. Each of the plurality of taps 315, 325, 335, 345 are, in turn, connected to a plurality of homes 310, 320, 330, 340 through bi-directional communications pathways 313, 323, 333, 343. Thus, the example environment is configured so that information may be exchanged between the plurality of homes 310, 320, 330, 340 and the headend 303. While the non-limiting example environment comprises homes 310, 320, 330, 340 as signal sources, it will be clear to one of ordinary skill in the art that the sources of signals may be industrial buildings or even other hardware devices that are configured to transmit and receive information. Thus, the homes 310, 320, 330, 340 are merely used in FIG. 3 for illustrative purposes, and not as limitations on the invention. Additionally, while FIG. 3 shows the interface between the coaxial line 150 and the homes 310, 320, 330, 340 to be encoding taps 315, 324, 335, 345, it will be clear to one of ordinary skill in the art that the encoding mechanism (as described below) may be incorporated into other active devices (e.g., amplifiers, etc.) or passive devices (e.g., passives, splitters, relays, etc.) without limiting the scope of the invention. Thus, taps are used only for illustrative purposes and are not intended to limit the scope of the invention.

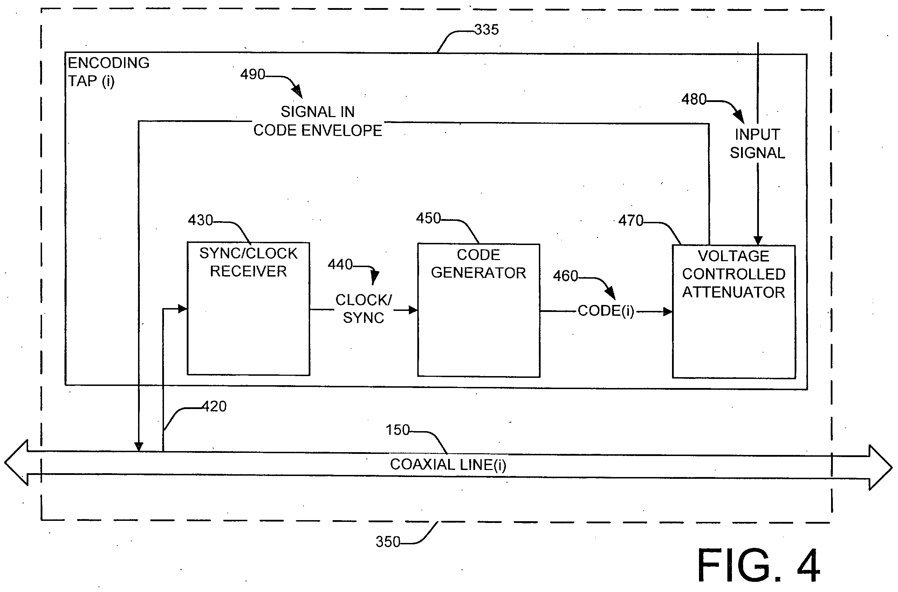

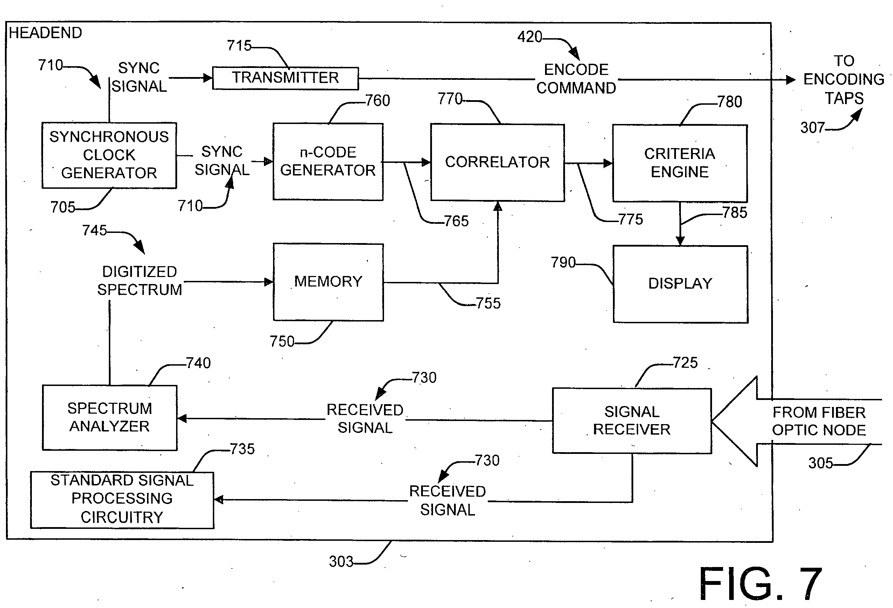

FIG. 4 is an exploded view of one encoding tap 335 of FIG. 3 showing several relevant components, among others, associated with the encoding tap 335. As shown in FIG. 4, the encoding tap 335 comprises a clock receiver 430 that is configured to receive an encode command 420 from the coaxial line 150. The encode command 420 may simply be a synchronization signal, which is generated by the headend 303 (generation of the synchronization signal shown below with reference to FIGS. 7 through 11). The clock receiver 430 is further configured to produce (or relay) a synchronization signal 440 to other components of the encoding tap 335. The encoding tap 335 further comprises a code generator 450 configured to receive a synchronization signal 440 that is produced (or relayed) by the clock generator 430 to the code generator 450. Upon receiving the synchronization signal 440, the code generator 450 is configured to generate a code 460, which is relayed to a voltage controlled attenuator 470. The voltage controlled attenuator 470 is configured to receive an input signal 480 in addition to the generated code 460, and, using the code 460, selectively attenuate the input signal 480 to produce a signal in a code envelope 490. In one embodiment of the invention, the voltage controlled attenuator 470 is configured to attenuate only the upstream signals (i.e., the signals that are transmitted from the home 330 (FIG. 3) to the headend 303 (FIG. 3)). In that embodiment, the upstream signals may be carried on a different frequency range than the downstream signals, thereby facilitating the selective attenuation of only the upstream portions. Alternatively, rather than using a frequency selective attenuator 470, a direction-dependent attenuator, which selectively attenuates signals based on directionality, may be used. The signal in the code envelope 490 is transmitted from the encoding tap 335 to the coaxial line 150 through the bi-directional communications pathway 337, 339 (FIG. 3).

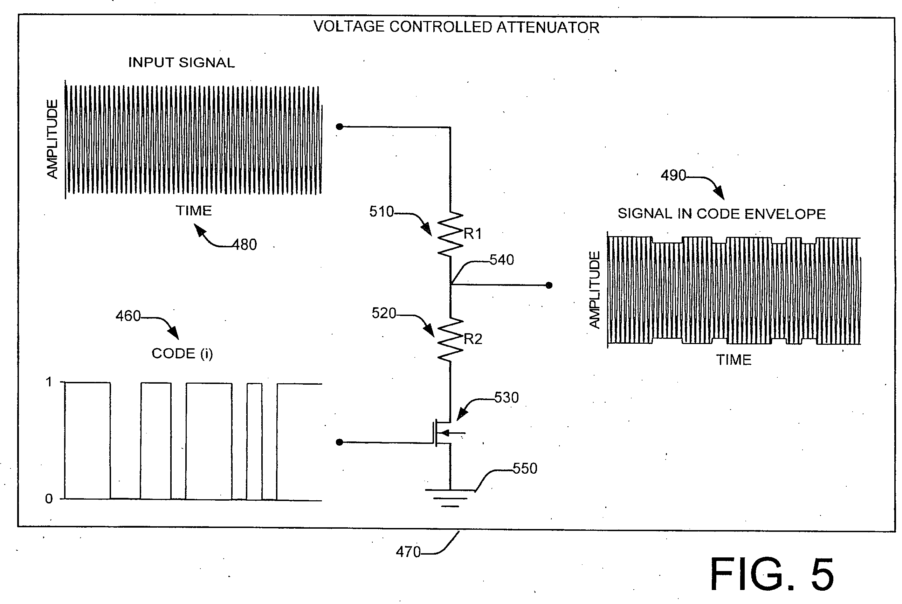

FIG. 5 is a block diagram showing relevant components of a voltage controlled attenuator 470 of FIG. 4 configured to selectively attenuate portions of the input signal 480. In this example, among others, the voltage controlled attenuator 470 comprises a voltage divider circuit having two resistors, R1 510 and R2 520, and a switch 530. The voltage divider circuit is configured in such a way that, when the transistor switch 530 is open (i.e., R2 520 is not connected to ground), the output of the voltage divider follows:

$$V_{out} = V_{in} \qquad\qquad [Eq.\ 1].$$

On the other hand, if the transistor switch 530 is closed (i. e., R2 520 is connected to ground), then the output of the voltage divider follows:

$$V_{out} = \left( \frac{R2}{R1+R2} \right) V_{in} \qquad\qquad [Eq.\ 2].$$

Thus, the voltage divider circuit in the voltage controlled attenuator 470 is configured in such a way that, depending on the state (i.e., open or closed circuit) of the transistor switch 530, the output of the voltage divider circuit will fluctuate according to Eq. 1 and Eq. 2.

As shown in the particular non-limiting example of FIG. 5, if an input signal 480 is applied to the input of the voltage divider, and, further, if a pseudo-random binary pattern (i.e., a pseudo-random sequence of highs and lows) is applied to the switch 530, the input signal 480 will effectively be amplitude modulated according to the pseudo-random code 460, thereby producing an encoded signal (e.g., the signal in a code envelope 490). Additionally, since the amplitude fluctuations are independent of the input signal 480, the input signal could further be encoded using standard encoding techniques such as time division multiple access (TDMA) techniques, frequency division multiple access (FDMA) techniques, code division multiple access (CDMA) techniques, or even other simple frequency modulation (e.g., radio-frequency (RF) carrier modulation) techniques. If each of the encoding taps 315, 325, 335, 345 (FIG. 3) comprise a code generator 450 that contains a unique code 460, and if each of the unique codes 460 are orthogonal to the codes of other encoding taps 315, 325, 335, 345 (FIG. 3), then each signal generated from each of the source sites will have a unique envelope associated with that signal. As shown later, this will be the basis for identifying sites of ingress.

While the example of FIG. 5 shows a voltage divider circuit for effectively generating the signal in the code envelope 490, it will be clear to one of ordinary skill in the art that such a code envelope may be generated by other methods and then subsequently used to amplitude modulate the input signal 480. Thus, the specific approach provided in FIG. 5 is intended only as one approach, among many, that may be used to effectively amplitude modulate an input signal 480 into a code envelope using a pseudo-random pattern. Additionally, while the pseudo-random sequence, as shown in FIG. 5, has fixed amplitudes of 1 and 0, it will be clear to one of ordinary skill in the art that the absolute amplitude of the signal may vary, so long as the pattern that is represented by the pseudo-random sequence may be used to generate a corresponding signal envelope for the input signal 480. In short, while the system of FIG. 5 shows a preferred embodiment for amplitude modulating a signal in a pseudo-random fashion, it will be clear to one of ordinary skill in the art that other approaches may be used to generate the signal in the code envelope 490.

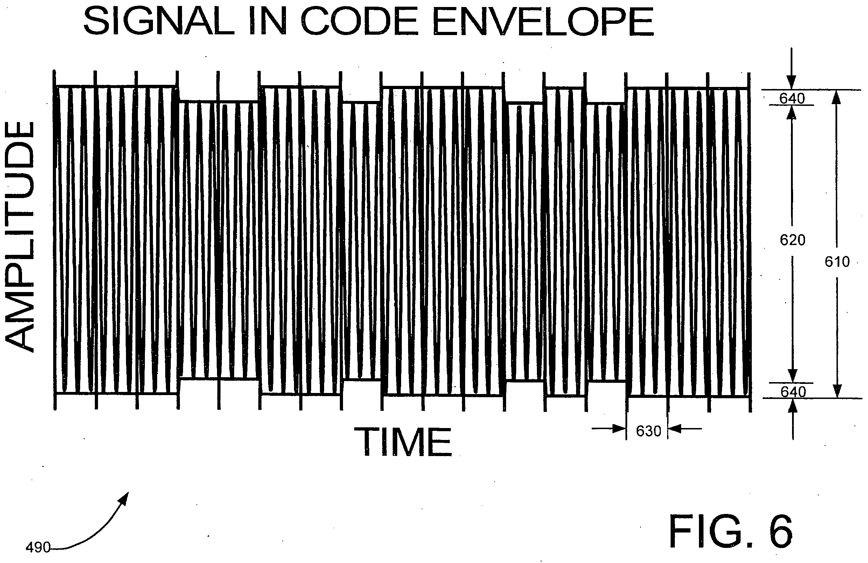

FIG. 6 is an exploded view of the signal 490 of FIG. 5 in a code envelope that is generated by the circuit of FIG. 5. As shown in FIG. 6, the envelope comprises several discrete time segments 630 of finite duration. Additionally, the maximum envelope amplitude 610 and the minimum envelope amplitude 620 are related to each other as shown in Eqs. 1 and 2. Thus, by carefully manipulating the resistor values of FIG. 5, the amplitude difference 640 (*i.e.,* the relative amplitudes) may be altered in a controlled manner. Also, as shown in FIG. 6, the signal in the code envelope 490 (also referred to as the encoded signal) includes the input signal. Thus, unlike the winking approach, in which whole portions of signals are absent for certain durations, this system provides for continuous transmission of signals while concurrently generating a code. Additionally, unlike the winking approach, this system allows each source site to generate a code envelope independently, thereby allowing concurrent testing of each source site. In a preferred embodiment of the invention, the relative amplitude difference between the maximum envelope amplitude and the minimum envelope amplitude will be approximately 2 to 5 percent (*i.e.,* the minimum envelope amplitude will be approximately 95 to 98 percent of the maximum envelope amplitude). Greater differences may be implemented. However, as the difference increases, the integrity of the signal will correspondingly decrease. Conversely, as the difference decreases, the relative difference approaches the signal-to-noise limit and, hence, the maximum and minimum amplitudes become indistinguishable. In any event, the goal is to amplitude modulate the signal in a code envelope that alters the signal, preferably in a noticeable step-wise manner that does not compromise the integrity of the signal. Also, in the preferred embodiment of the invention, the finite time segment 630 would be approximately 100 to 1000 msec (*i.e.,* the code frequency would be approximately 1 to 10 Hz). By allowing for a time segment 630 of such duration, the signal within that code envelope may be averaged over the time segment 630, thereby providing a better estimate of the root-mean-square (RMS) value of the signal for that time segment 630. Since the time segment 630 spans a finite data portion (*i.e.,* a fixed number of data bits), these time segments 630 may also be referred to as words. Another advantage of having longer words (*i.e.,* longer time segments 630) is that, if the relative difference between the maximum envelope amplitude and the minimum envelope amplitude is small, then by averaging over a longer time, this difference will more clearly manifest itself. Although example numbers of 100 to 1000 msec are given for each word duration, it will be clear to one of ordinary skill in the art that any word-duration that is long enough to provide an accurate root-mean-square (RMS) measurement will be within the scope of this invention. Since the ingress signal may possess noise-like properties, increasing the effective measurement time for each code word duration will lower the effective RMS contribution due to the noise like properties of the ingress. Likewise, increasing the length of the word duration and number of samples included in each averaging period also reduces the noise contribution of the ingress.

FIG. 7 is an exploded view of the headend 303 of FIG. 3 showing several relevant components, among others, associated with the headend 303. As shown in FIG. 7, the headend comprises a signal receiver 725 configured to receive a composite signal from the fiber optic node 309 (FIG. 3). Once the signal is received at the signal receiver 725, the received signal 730 is transmitted to a standard signal processing circuit 735 and a spectrum analyzer 740. The spectrum analyzer 740 is configured to generate a digitized spectrum 745 from the received signal 730. This digitized spectrum 745 is stored in memory 750 for subsequent processing. In addition to digitizing the received signal 730, the spectrum analyzer 740, in one embodiment of the invention, may be configured to analyze the frequency spectrum of the received signal 730 to determine whether or not there are source sites having ingress at specific frequencies or ranges of frequencies. This may be done by the spectrum analyzer 740 because, in certain instances, ingress alters the spectrum of the received signal. For example, if the upstream signals are carried within a certain frequency range, then signals that appear outside of the frequency range may be indicative of ingress. From this determination, the spectrum analyzer 740 may be configured to select certain portions of the signal 730 that appear suspect and focus the ingress monitoring on the selected portion of the signal. Alternatively, rather than analyzing portions of the spectrum, the entire spectrum may be analyzed. Thus, rather than sequentially performing multiple measurements at discrete frequencies, a single-shot measurement of the entire spectrum may be obtained, and a subsequent Fourier transform may be applied to observe a global effect on the entire frequency spectrum. Regardless of whether the entire spectrum or only a portion of the spectrum is analyzed, the spectrum analyzer 470 functions to digitize the received signal 730.

In addition to the above-mentioned components, the headend 303 further comprises a synchronous clock generator 705 (also referred to simply as a clock generator), which is configured to generate a synchronization signal 710. The synchronization signal 710 prompts a transmitter 715 to transmit an encode command 420 to the encoding tap 335 (FIG. 4). In one embodiment of the invention, the encode command 420 is simply the synchronization signal 710 itself. It is this synchronization signal 710 that synchronizes the code generation at the headend 303 (FIG. 3) and the code generation at the encoding taps 315, 325, 335, 345 (FIG. 3). The synchronization signal 710 is also transmitted to an n-code generator 760 at the headend 303. Unlike the code generator 450 (FIG. 4) that is associated with the encoding tap 335 (FIG. 3), the n-code generator 760 at the headend 303 generates multiple codes (or a code matrix) that parallel all the individual codes 460 (FIG. 4) generated by all of the encoding taps 335 (FIG. 3). Despite this difference between the headend 303 (FIG. 3) and the encoding tap 335 (FIG. 3), the codes generated at both of these sites is synchronized by the synchronization signal. One way of synchronizing the encoding is by generating a single synchronization signal 710, which is configured to initiate the beginning of the encoding process. If every word is a fixed duration, then once the beginning of the encoding process is synchronized, each of the words in each of the codes will be synchronized. Another way of synchronizing the encoding is by generating multiple synchronization signals 710 and having each word of the code be generated in response to the synchronization signal. This allows the system to analyze each word segment separately. In either event, the synchronization signal 710 allows the headend 303 (FIG. 3) and the encoding tap 335 (FIG. 3) to have corresponding word durations.

The headend 303 further comprises a correlator 770 that, once the code matrix is generated, receives the code matrix and the stored spectrum 755, and determines the correlation between the stored spectrum 755 and the code matrix. In other words, the correlator 770 is configured to generate a matrix of correlation coefficients that are indicative of the spectrum's correlation to the generated codes in the code matrix. The system further comprises a criteria engine 780 that is configured to receive the correlation coefficients from the correlator 770 and determine, from the correlation coefficients, whether or not the corresponding code 765 and, hence, the corresponding encoding tap 335 (FIG. 3) is the site (or source) of ingress. This information may be shown using a display 790.

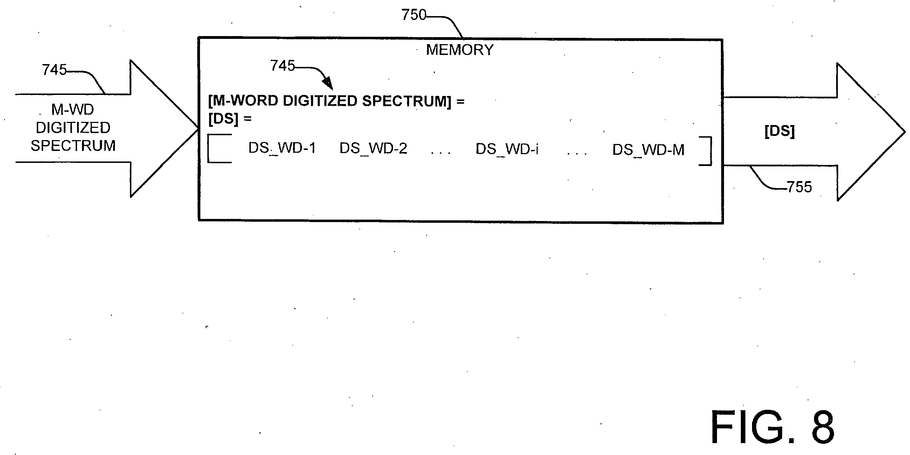

FIG. 8 is an exploded view of the memory block 750 of FIG. 7 showing an m-word digitized spectrum 745 as a matrix 745. Since the received signal 730 is stored in memory 750 as a digitized spectrum 745 (*i.e.,* a digital representation of the analog signal), if the spectrum is m-words in length, the spectrum may simply be represented as an mx 1 matrix 745, wherein the first word of the digitized spectrum (*i.e*., DS_WD_1) represents the first finite time segment 630 (FIG. 6) of the signal, the second word (*i.e.,* DS_WD_2) represents the second finite time segment 630 (FIG. 6), *etc.* Thus, each of the m elements of the matrix corresponds to the duration of encoding for each word of the code. The reason for representing the received signal as a matrix 745 will become clearer with reference to the following figures. However, it will be clear to one of ordinary skill in the art that, while matrices are used for the sake of simplicity, similar operations may be executed without the use of matrices.

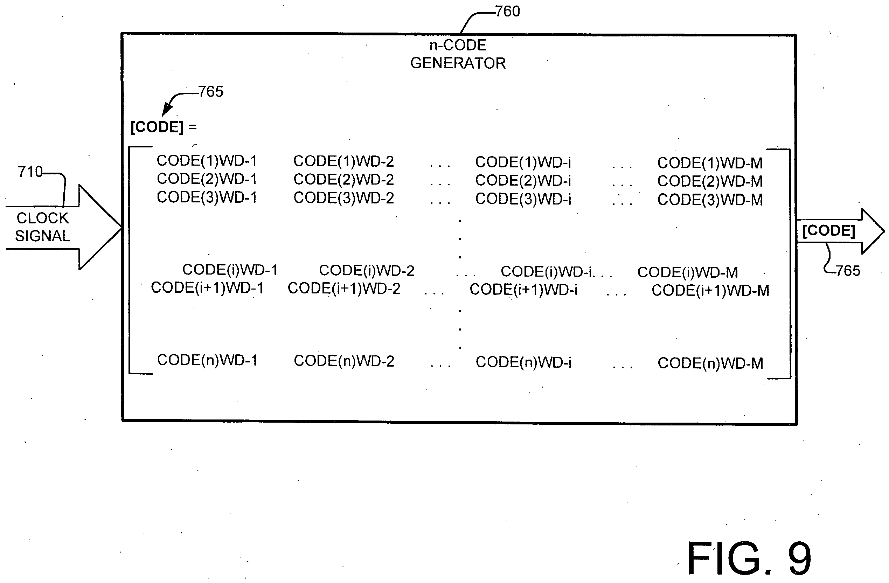

FIG. 9 is an exploded view of the n-code generator 760 of FIG. 7 showing a plurality of m-word codes in matrix form 765. As discussed with reference to FIG. 7, the n-code generator 760 is configured to generate a plurality of codes 765. These codes 765 are represented in an nx m matrix, wherein each of the n-rows contains a pseudo-random sequence of m-words. The pseudo-random sequence in each of the n-rows represents the pseudo-random code 460 (FIG. 4) that is generated by the code generator 450 (FIG. 4) in each encoding tap 315, 325, 335, 345 (FIG. 3). Thus, the n-rows correspond to the total number of encoding taps 315, 325, 335, 345 (FIG. 3) or source sites, and the m columns correspond to each word of the code 460 (FIG. 4) that is generated at the encoding tap 335 (FIG. 3) as well as the headend 303 (FIG. 3). This nx m matrix is subsequently used to determine the source (or sources) of ingress since each code within the matrix corresponds to a known source site. In one embodiment of the invention, the n-code generator 760 is configured to receive the synchronization signal 710 from the synchronous clock generator 705 and sequentially generate each word of the n codes in response to the synchronization signal 710. Thus, the n codes are generated on a word-by-word basis, wherein the generation of each word of the n codes is synchronized by the synchronization signal 710. In this embodiment, since each word of the n codes are synchronized by the synchronization signal 710, the signals that are received during a given word duration may be simultaneously measured, thereby allowing for synchronous analysis of all components of the composite signal for each time segment 630 (FIG. 6).

In another embodiment of the invention, each of the m words in the n codes is a fixed duration, and, hence, the synchronization signal 710 merely initiates the beginning of n-code generation by the n-code generator 760. In this embodiment, the entire m-word spectrum may be analyzed using the nx m matrix in a single shot by applying matrix mathematics. Regardless of whether the composite signal is analyzed on a word-by-word basis or in a single shot, the synchronous generation of each of the words in the codes permits the system to determine a relationship between the nx m matrix and the composite signal.

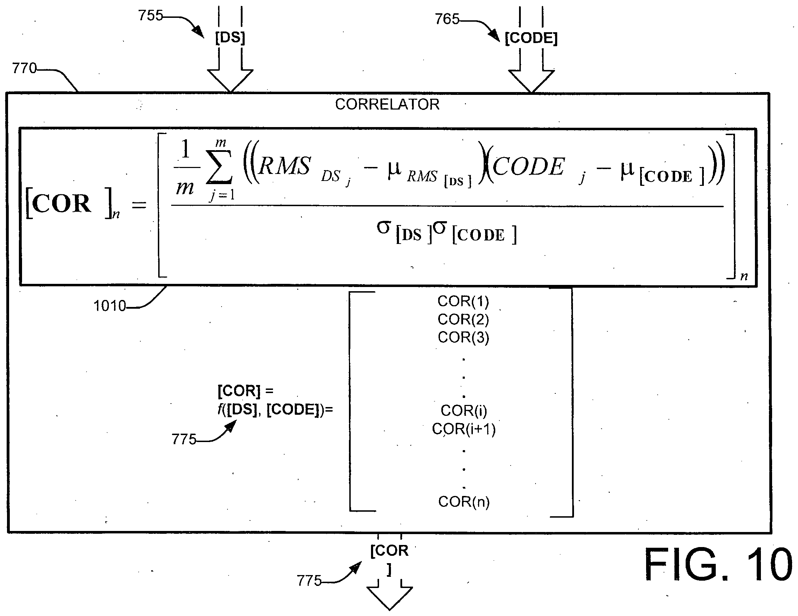

FIG. 10 is an exploded view of the correlator 770 of FIG. 7 showing, as a non-limiting example, a statistical correlation function 1010. Once the n-code generator 760 (FIGS. 7 and 9) has generated the n-codes 765 (FIG. 7) that are associated with the various source sites (*e.g.,* the plurality of homes and encoding taps), these codes 765 may be used to extract source site information from the composite signal (*i.e.,* the digitized spectrum 755 (FIG. 7), which was previously stored in memory 750 (FIG. 7)). The correlator 770 is configured to determine the correlation between each of the n-codes 765 in the nx m matrix and the digitized spectrum 755. One approach is by applying a statistical correlation function 1010:

$$[\mathbf{COR}] = \left[ \frac{\frac{1}{m}\sum_{j=1}^{m}\left(\left(RMS_{DS_j} - \mu_{RMS_{DS}}\right)\left(CODE_j - \mu_{[CODE]}\right)\right)}{\sigma_{[DS]}\sigma_{[CODE]}} \right]_n \qquad [\text{Eq. 3}]$$

to the code 765 and digitized spectrum 755 matrices, wherein m is the number of words of each code 765, $RMS_{DS_j}$ is the root-means-square (RMS) value of the digitized spectrum (DS) 755 over the specific $j^{th}$-word of the m-word code, $\mu_{RMS_{DS}}$ is the average RMS value of the digitized spectrum 755 over the entire m-words, $CODE_j$ is the code value for the $j^{th}$ code-word, and $\sigma_{[DS]}$ and $\sigma_{[CODE]}$ are the standard deviations of the digitized spectrum 755 and the code 765, respectively, over the m-words. As one can see, if all of the generated codes are orthogonal, then by applying the correlation function 1010 of Eq. 3 to the nx m code matrix and the $1 \times m$ digitized spectrum matrix 745, the result would be an nx 1 correlation matrix 775 having a normalized correlation coefficient for each of the n codes in the nx m code matrix. In other words, each of the elements in the nx 1 correlation matrix 775 would be a number between -1 and 1, wherein a number close to zero (0) would indicate a low correlation, and a number at either extreme (*i.e.,* 1 or -1) would indicate a high correlation. Thus, the calculated correlation matrix 775 serves to extract each of the component signals from the composite signal according to their respective source sites. As one can see, since all of the codes are simultaneously generated at each source site as well as at the headend 303 (FIG. 3), there is no need to sequentially test each site for ingress. Rather, all of the sites may be simultaneously evaluated for ingress.

While the specific embodiment of FIG. 10 shows a statistical correlation function to separate the component signals from the composite signal, it will be clear to one of ordinary skill in the art that the correlation function may be implemented in a number of different ways. Thus, while the general function of Eq. 3 allows for a pseudo-random word-pattern having an arbitrary magnitude ratio (*i.e.*, the ratio of the maximum envelope amplitude to the minimum envelope amplitude may be any arbitrary fixed number), if a binary pseudo-random pattern having a magnitude of [1,0] is used, an exclusive-OR-type (XOR) function may be used to estimate the correlation between the composite signal and the n generated codes. Alternatively, if the pseudo-random pattern is a set of orthogonal codes containing word-magnitudes of [+1,-1], with the number of "+1" words equal to the number of "-1" words, then a simple matrix element multiplication of $CODE_j$ -by- $RMS_{DS_j}$ across the m words and a subsequent addition of the m-words would produce an estimate of the correlation.

Regardless of which approach is used, so long as the correlation between the code matrix 765 and the spectrum matrix 745 produces the correlation matrix 1010, the system is capable of determining the source(s) of ingress. While other approaches exist to determine the correlation between the code matrix and the digitized spectrum matrix 745, these other approaches are well known in the art and they will not be discussed further.

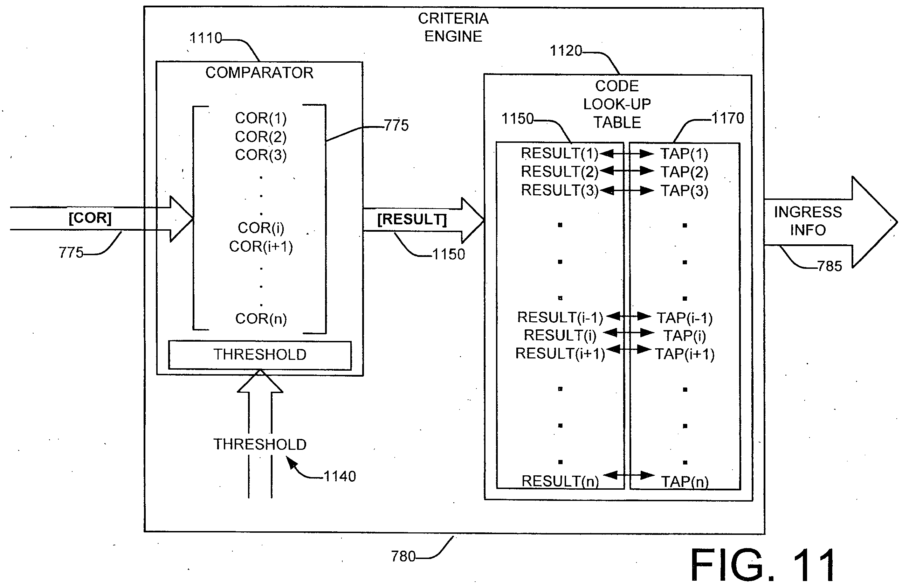

FIG. 11 is an exploded view of the criteria engine 780 of FIG. 7 showing a comparator 1110 and a code look-up table 1120 associated with the criteria engine 780. Once the correlation coefficients of the correlation matrix 775 have been determined, the criteria engine 780 determines which of the correlation coefficients correspond to sources of ingress. As shown in FIG. 11, the criteria engine 780 comprises a comparator 1110 connected to a code look-up table 1120 (also referred to simply as a look-up table) via a bus 1150. The comparator 1110 is configured to receive a threshold 1140 and the correlation coefficients of the correlation matrix 775, and compare each element of the correlation matrix 775 with the threshold 1140. If the compared element of the correlation matrix 775 is greater than the threshold 1140, then the result 1150 for that element is flagged as a site of ingress. If, on the other hand, the compared element of the correlation matrix 775 is not greater than the threshold 1140, then the result 1150 for that element is flagged as a site of no ingress. The result matrix 1150 is transmitted to the code look-up table 1120, which is configured to match each element of the result matrix 1150 with a known tap (or source) site 1170. This information, which identifies specific encoding taps 335 (FIG. 3) as sources of ingress, is then made available by the criteria engine 780 for display 790 or other use.

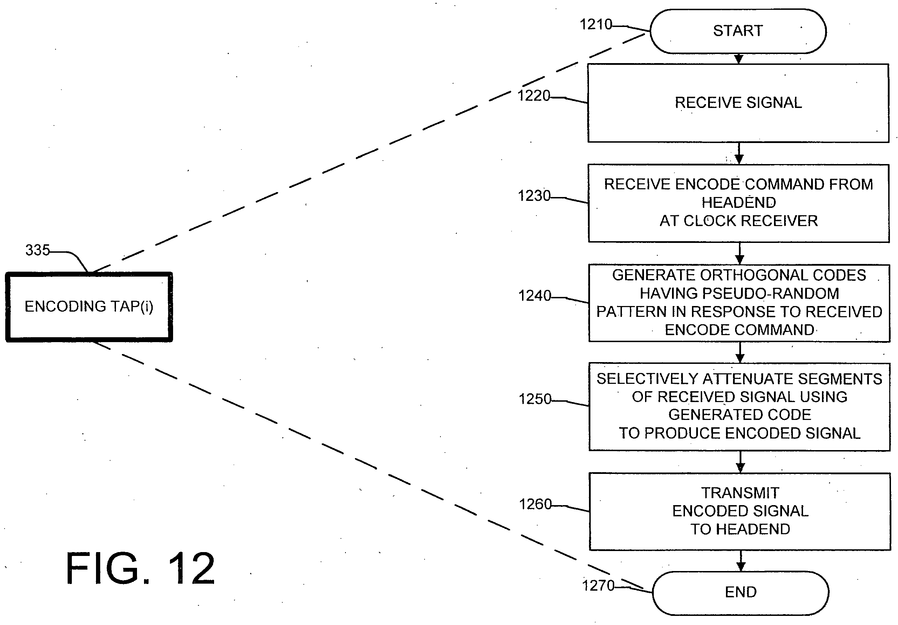

As shown in FIGS. 3 through 11, since the codes at the source sites (e.g., the encoding taps of FIG. 3) and the headend 303 (FIG. 3) are synchronized by a synchronization signal, the system is capable of simultaneously determining the ingress status of each of the plurality of source sites. FIGS. 12 through 17 provide further details on one possible method, among others, that may be implemented by the non-limiting example system of FIGS. 3 through 11.

**Method**

FIGS. 12 through 17 are flow charts that show relevant functions associated with the system components described in FIGS. 3 through 11. These figures are provided solely for the purposes of illustration in order to better teach and enable one of ordinary skill in the art to make and practice the invention.

FIG. 12 is a flow chart showing relevant functions associated with the encoding tap 335 of FIG. 3. In a broad sense, one embodiment of the invention, among others, may be seen from the perspective of the encoding tap 335 (FIG. 3). From this perspective, encoding taps 315, 325, 335, 345 (FIG. 3) receive, in step 1220, an input signal 480 (FIG. 4) from each of the respective homes 310, 320, 330, 340 (FIG. 3). For simplicity, only one encoding tap 335 (FIG. 3) will be discussed since the extension to other encoding taps 315, 325, 345 (FIG. 3) will be clear to one of ordinary skill in the art. In addition to receiving 1220 the input signal 480 (FIG. 4), in step 1230, the encoding tap 335 (FIG. 3) also receives an encode command 420 (FIG. 4) at the clock receiver 430 (FIG. 4). The encoding tap 335 (FIG. 3) then generates, in step 1240, a code 460 (FIG. 4). In a preferred embodiment, the code 460 is a pseudo-random pattern of words, wherein each word is finite in duration. Additionally, in the preferred embodiment, the code 460 associated with each encoding tap 335 (FIG. 3) is orthogonal to the codes associated with the other encoding taps 315, 325, 345 (FIG. 3). Once the code 460 (FIG. 4) has been generated 1240 by the encoding tap 335 (FIG. 3), the encoding tap 335 (FIG. 3) then selectively attenuates, in step 1250, selected segments of the received 1220 input signal 420 (FIG. 4) using the generated 1240 code 460 (FIG. 4). This produces an amplitude attenuated signal in a code envelope 490 (FIG. 4), wherein the envelope is correlated to the generated 1240 code 460 (FIG. 4). This amplitude attenuated signal 490 (FIG. 4) is then transmitted, in step 1260, from the encoding tap 335 (FIG. 3) to the headend 303 (FIG. 3). While the preferred embodiment of the invention selectively attenuates 1250 the input signal 480 (FIG. 4) to effectively envelope the signal, it will be clear to one of ordinary skill in the art that a separate envelope may be generated using the code 460 (FIG. 4), and the input signal 480 (FIG. 4) may thereafter be encoded using the generated envelope.

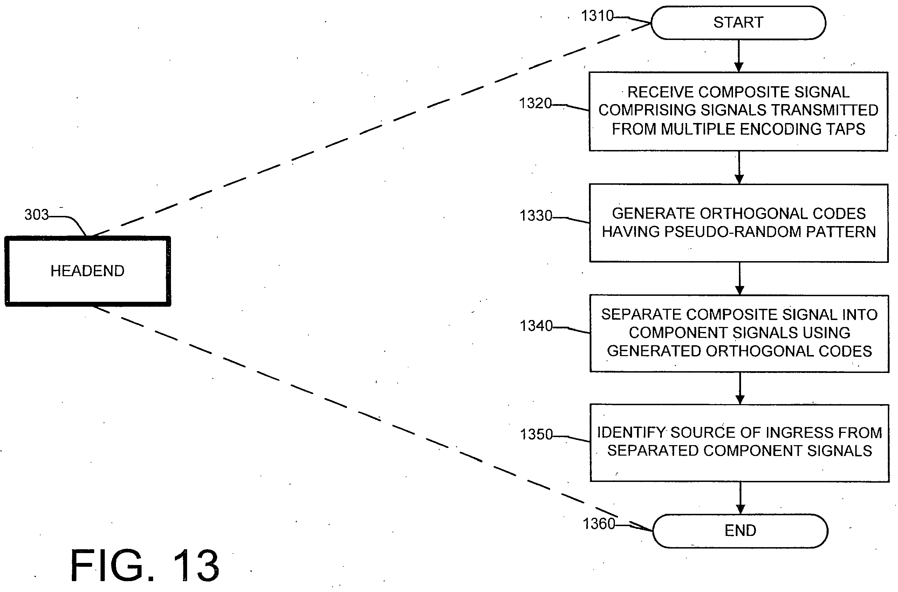

FIG. 13 is a flow chart showing relevant functions associated with the headend 303 of FIG. 3. In another embodiment of the invention, the method may be seen from the perspective of the headend 303 (FIG. 3). From this perspective, the headend 303 (FIG. 3) receives, in step 1320, a composite signal 730 (FIG. 7) that comprises the signals that are transmitted 1260 (FIG. 12) by the encoding taps 315, 325, 335, 345 (FIG. 3). Once the composite signal 730 (FIG. 7) is received 1320, the headend 303 (FIG. 3) generates, in step 1330, a plurality of codes 765 (FIG. 7), wherein each code 460 (FIG. 4) comprises a pseudo-random arrangement of words. In a preferred embodiment, the codes 460 (FIG. 4) that are generated 1330 are orthogonal codes, and each orthogonal code corresponds to one of the amplitude attenuated signals from each of the encoding taps. The headend 303 (FIG. 3) then separates, in step 1340, the received 1320 composite signal 730 (FIG. 7) using the generated 1330 codes 460 (FIG. 4). From the separated 1340 signal components, the headend 303 (FIG. 3) identifies, in step 1350, the source of ingress.

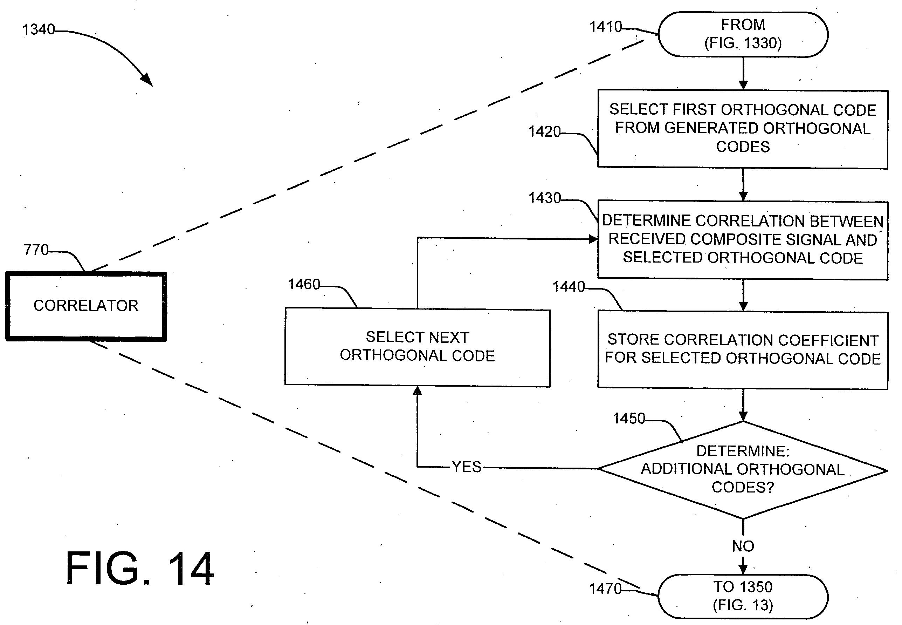

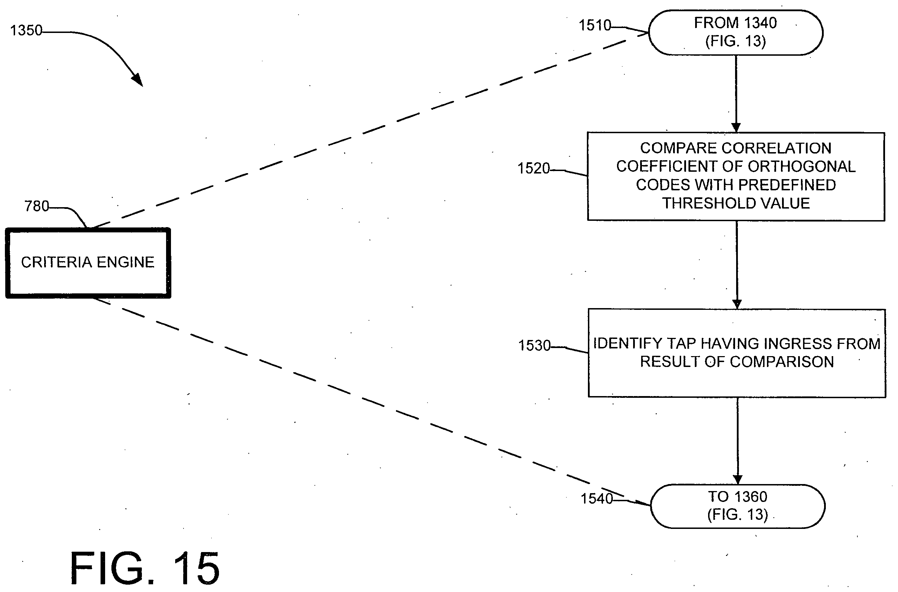

FIG. 14 is a flow chart showing relevant functions associated with the correlator of FIGS. 7 and 10. As shown in FIG. 13, one of the steps associated with the preferred embodiment is the step of separating 1340 the composite signal 730 (FIG. 7) into its component parts. In the preferred embodiment, the separating step 1340 is executed by the correlator 770 (FIG. 7). Thus, the correlator 770 (FIG. 7), in step 1420, selects the first code from the generated codes. In other words, the first row of the code matrix is selected in step 1420. After selecting 1420 the first code, the correlator 770 (FIG. 7) determines, in step 1430, a correlation between the selected 1420 code and the received 1320 (FIG. 13) composite signal 730 (FIG. 7). The determined 1430 correlation is stored, in step 1440, as the first element of a correlation matrix 775. The correlator 770 (FIG. 7) then determines, in step 1450, whether a correlation with the received 1320 (FIG. 13) composite signal 730 (FIG. 7) has been determined 1450 for all of the generated 1240 codes. If the correlator 770 (FIG. 7) determines, in step 1450, that there are additional codes for correlation calculation, then the correlator 770 (FIG. 7) selects, in step 1460, the next code and repeats the process from step 1430. If, on the other hand, the correlator 770 (FIG. 7) determines 1450 that a correlation has been determined 1430 for all of the generated 1330 (FIG. 13) codes, then the system proceeds to the method steps of FIG. 15.

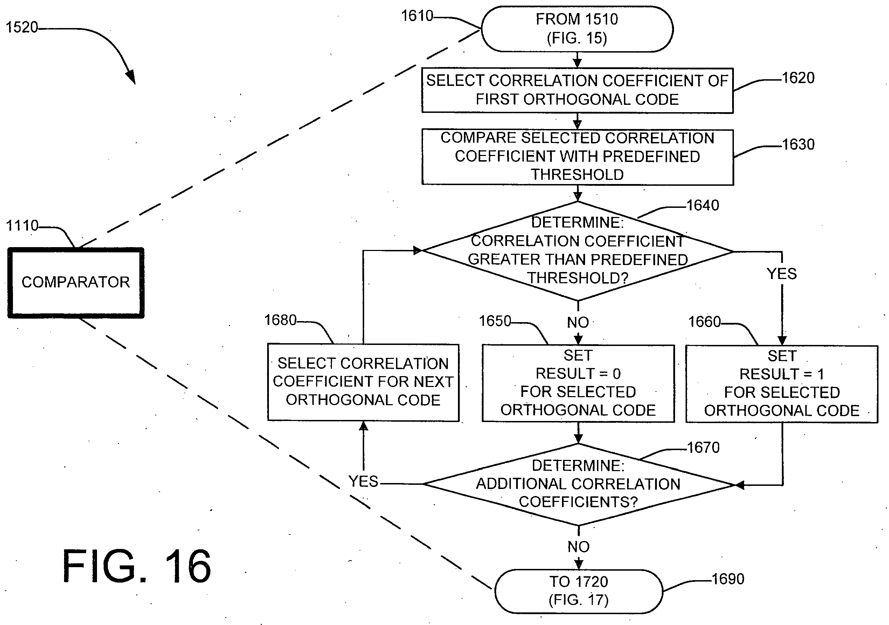

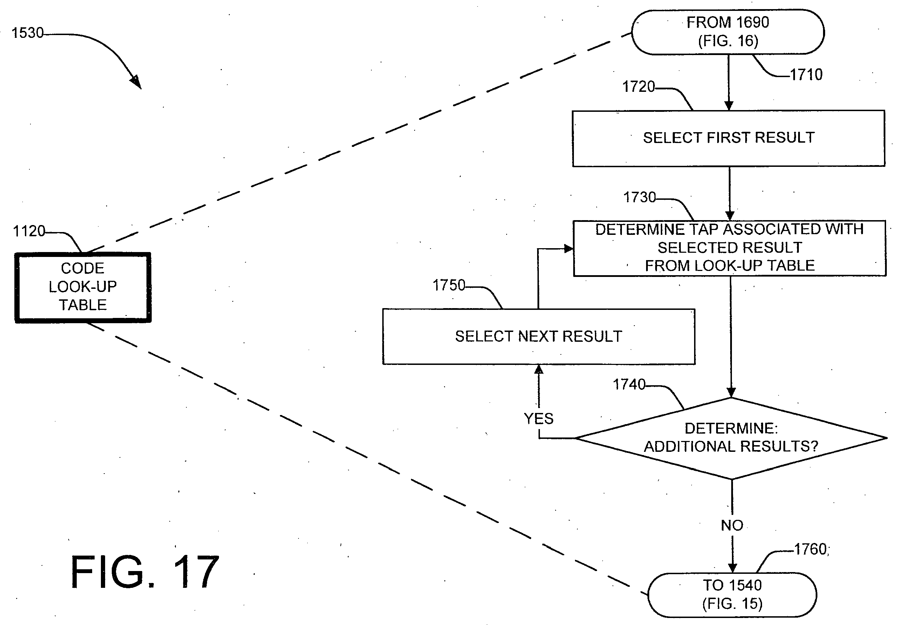

FIG. 15 is a flow chart showing relevant functions associated with the criteria engine of FIGS. 7 and 11. As shown in FIG. 13, in the preferred embodiment of the invention, one of the method steps is the identification 1350 of ingress sites (*i.e.,* sources of ingress). In the preferred embodiment, the identification 1350 (FIG. 13) is performed by the criteria engine 780 (FIG. 7), and one embodiment of this method step may be seen as a two-step process. Thus, in step 1520, the criteria engine 780 (FIG. 7) compares the correlation of the plurality of codes with a predefined threshold, and, in step 1530, the criteria engine 780 (FIG. 7) identifies potential sources of ingress from the result of the comparison 1520. This two-step process is shown in greater detail in FIGS. 16 and 17.

FIG. 16 is a flow chart showing relevant functions associated with the comparator 1110 of FIG. 11. The comparison step 1520 (FIG. 15), in the preferred embodiment, is performed by the comparator 1110 (FIG. 11). Thus, in step 1620, the comparator 1110 (FIG. 11) selects the first element (e.g., a correlation coefficient) of the correlation matrix 775 (FIG. 7) that was generated from FIG. 14. The comparator 1110 (FIG. 11) then compares, in step 1630, the selected 1620 element with a predefined threshold value 1140 (FIG. 11). In the preferred embodiment, the predefined threshold value 1140 (FIG. 11) is a value that indicates the degree of undesired signals reflected in the correlation coefficient. The predefined threshold value 1140 (FIG. 11) may be selected using a variety of approaches. One approach may be to calculate the RMS variation in the absence of attenuation *(i.e.,* without applying a code envelope). If the calculated correlation value exceeds the RMS variation by a fixed amount, then this may be seen as evidence of ingress. Additionally, it may be possible to calibrate the system against a known signal, such as an upstream transmission from a cable modem or set-top, thereby providing an absolute value of the ingress level. Regardless of how the threshold value is determined, once it has been determined, the threshold value 1140 (FIG. 11) is compared with the correlation coefficient *(i.e.,* the correlation matrix element) to identify potential sources of ingress.

Once the comparator 1110 (FIG. 11) compares 1630 the selected 1620 correlation coefficient to the predefined threshold 1140 (FIG. 11), the comparator 1110 (FIG. 11) then determines, in step 1640, whether the correlation coefficient is greater than the predefined threshold value 1140 (FIG. 11). If the system determines 1640 that the correlation coefficient is not greater than the threshold value 1140 (FIG. 11), then the comparator 1110 (FIG. 11), in step 1650, sets a result as detecting no ingress. If, on the other hand, the comparator 1110 (FIG. 11) determines 1640 that the correlation coefficient is greater than the threshold value 1140 (FIG. 11), then the comparator 1110 (FIG. 11) sets, in step 1660, the result as detecting ingress. In a preferred embodiment of the invention, the result may simply be set as "1" or "0" depending on whether the correlation coefficient exceeds or does not exceed the threshold. Upon setting the result for the first comparison, the comparator 1110 (FIG. 11) further determines, in step 1670, whether additional correlation coefficients exist for result determination. If the comparator 1110 (FIG. 11) determines 1670 that additional correlation coefficients exist, then the comparator 1110 (FIG. 11) selects, in step 1680, the next correlation coefficient from the correlation matrix 775 (FIG. 7) and repeats the procedure from step 1640. If, on the other hand, the comparator 1110 (FIG. 11) determines 1670 that all results have been determined, then the method steps continue to FIG. 17. As one can see from FIG. 16, when the comparator is finished with the comparison of all of the correlation coefficients, a result matrix is generated in which there are n elements, each element corresponding to one of the n generated codes.

FIG. 17 is a flow chart showing relevant functions associated with the code look-up table of FIG. 11. Once the result matrix 1150 has been generated according to FIG. 16, the code look-up table 1120 (FIG. 11) identifies 1530 (FIG. 15) which encoding taps 315, 325, 335, 345 (FIG. 3) are the potential sources of ingress. The method steps associated with this process is shown in FIG. 17. The look-up table 1120 (FIG. 11), in step 1720, selects the first result *(i.e.,* the first element in the result matrix). The look-up table 1120 (FIG. 11) then determines, in step 1730, which tap is associated with that result. The look-up table 1120 (FIG. 11) then determines, in step 1740, whether additional results exist for site determination 1730. If additional results exist, then the look-up table, in step 1750, selects the next result and repeats the procedure from step 1730. If, on the other hand, all of the results have been identified to a source site *(i.e.,* an encoding tap 335 (FIG. 3)), then the code look-up table 1120 (FIG. 11) exits to step 1540 (FIG. 15).

As shown from the preferred embodiment in FIGS. 12 through 17, the method steps allow for detection of sources of ingress using a pseudo-random code that is generated from each of the individual source sites, which is thereafter correlated to a plurality of codes generated at a headend 303 (FIG. 3). If the generated codes at the headend 303 (FIG. 3) correlate with the generated codes at each of the source sites, then the signal components that are associated with each of the source sites may be identified by the degree of correlation between the source site and headend 303 (FIG. 3) codes.

The code generator 450 (FIG. 4), correlator 770 (FIG. 7), n-code generator 760 (FIG. 7), criteria engine 780 (FIG. 7), comparator 1120 (FIG. 11), and the look-up table 1120 (FIG. 11) of the present invention can be implemented in hardware, software, firmware, or a combination thereof. In the preferred embodiment(s), these are implemented in software or firmware that is stored in a memory and that is executed by a suitable instruction execution system. If implemented in hardware, as in an alternative embodiment, they may be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The flow chart of FIGS. 12 through 17 show the architecture, functionality, and operation of a possible implementation of the code generation and correlation. In this regard, each block represents a module, segment, or portion of code, which comprises one or more executable instructions for implementing the specified logical function(s). It should also be noted that in some alternative implementations, the functions noted in the blocks may occur out of the order noted in FIGS. 12 through 17. For example, while the steps associated with FIGS. 14, 16, and 17 are shown as sequential and iterative steps, these may in fact be executed substantially concurrently using block matrix processing methods, or the blocks may sometimes be executed in the reverse order, depending upon the functionality involved. Thus, any process descriptions or blocks in flow charts should be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

Although an exemplary embodiment of the present invention has been shown and described, it will be apparent to those of ordinary skill in the art that a number of changes, modifications, or alterations to the invention as described may be made, none of which depart from the scope of the present invention. For example, while the code modulated signal 490 (FIG. 4) is generated using a voltage controlled attenuator, it will be clear to one of ordinary skill in the art that the envelope may be generated separately, and the signal multiplied by (or convoluted with) the generated envelope. Additionally, while the preferred embodiment shows a system as a "constant on" system, whereby each encoding tap 335 (FIG. 3) is continuously generating a synchronized encoded signal in response to the synchronization signal, the system may alternatively be configured as a "triggered" system, whereby the encoding taps 335 (FIG. 3) are configured to "turn on" in response to the synchronization signal and thereafter generate the code enveloped signal. All such changes, modifications, and alterations should therefore be seen as within the scope of the present invention.

**Claims**

1. A headend system for identifying ingress at signal source locations, comprising:

   a receiver (725) configured to receive a composite signal from a plurality of signal source locations (315, 325, 335), wherein the composite signal comprises a plurality of encoded signals, wherein each of the plurality of encoded signals is correlated to a unique pseudo-random pattern associated with a signal source location; and
   a headend (303) configured to extract the signal source location from the received composite signal;
   wherein the headend comprises:

      a spectrum analyser (740) configured to digitize the composite signal and produce a digitized spectrum (745) from the composite signal;
      a multiple code generator (760) configured to generate a plurality of codes, wherein each of the plurality of codes is correlated to each of the plurality of encoded signals;
      a correlator (770) configured to determine a plurality of correlation coefficients, wherein each of the plurality of correlation coefficients is indicative of a correlation between the each of the plurality of codes and the composite signal;
      a clock generator (705) configured to generate a synchronization signal (710), wherein the synchronization signal is configured to initiate the generation of the plurality of codes;
      a comparator (780) configured to compare each of the plurality of correlation coefficients with a threshold value to produce a plurality of results, wherein each of the plurality of results is selected from a group consisting of presence of ingress and absence of ingress;
      a look-up table configured to identify signal source locations for each of the plurality of results.

2. A source (335) in a system for identifying ingress at signal source locations, the source having a unique identifier, the source comprising:

   a clock receiver (430) configured to receive a synchronisation signal from a clock generator (705) at a headend system as defined in claim 1, a code generator (450) for generating a code comprising a pseudo-random pattern on receipt of the synchronisation signal; and
   an attenuator (470) configured to encode a signal by selectively attenuating time segments of the signal according to the pseudo-random pattern of the code, wherein the pseudo-random pattern is related to the unique identifier;
   a transmitter for transmitting the encoded signal to the headend.

3. The source of claim 2, wherein the time segments of the signal have a fixed duration.

4. The source of claim 2, wherein the synchronization signal is configured to determine the duration of the time segments.

5. The source of claim 2 wherein the headend comprises the headend according to claim 1.

6. A system for identifying signal source locations, the system comprising the headend system of claim 1 and a plurality of sources according to any of claims 2 to 5.

7. A method for identifying ingress at signal source locations at a headend system, the method comprising the steps of :

receiving (1320) at a receiver (725) a composite signal from a plurality of signal source locations (315, 325, 335), wherein the composite signal comprises a plurality of encoded signals, wherein each of the plurality of encoded signals is correlated to a unique pseudo-random pattern associated with a signal source location; and extracting at a headend (303) the signal source location from the received composite signal, the method further comprising, at the headend:

digitizing using a spectrum analyser (740) the composite signal and produce a digitized spectrum from the composite signal;

generating (1330) using a multiple code generator (760) a plurality of codes, wherein each of the plurality of codes is correlated to each of the plurality of encoded signals;

determine at a correlator (770) a plurality of correlation coefficients, wherein each of the plurality of correlation coefficients is indicative of a correlation between the each of the plurality of codes and the composite signal;

generating at a clock generator (705) a synchronization signal (710), wherein the synchronization signal is configured to initiate the generation of the plurality of codes;

comparing each of the plurality of correlation coefficients with a threshold value to produce a plurality of results, wherein each of the plurality of results is selected from a group consisting of presence of ingress and absence of ingress;

identifying (1350) in a look-up table signal source locations for each of the plurality of results.

8. A method implemented at a source in a system for identifying ingress at signal source locations, the source having a unique identifier, the method comprising the steps of :

receiving (1230) at a clock receiver a synchronisation signal from a clock generator at a headend system as defined in claim 1 ; generating (1240) a code comprising a pseudo-random pattern on receipt of the synchronisation signal; and

encoding (1250) a signal using an attenuator by selectively attenuating time segments of the signal according to the pseudo-random pattern of the code, wherein the pseudo-random pattern is related to the unique identifier; transmitting (1260) the encoded signal to the headend.

9. The method of claim 8, wherein the time segments of the signal have a fixed duration.

10. The method of claim 8, further comprising using the synchronisation signal to determine the duration of the time segments.

11. The method of claim 8 wherein the headend implements the method according to claim 7.

**Patentansprüche**

1. Headend-System zum Identifizieren von Eingang an Signalquellorten, das Folgendes umfasst:

einen Empfänger (725), konfiguriert zum Empfangen eines zusammengesetzten Signals von einer Mehrzahl von Signalquellorten (315, 325, 335), wobei das zusammengesetzte Signal eine Mehrzahl von encodierten Signalen umfasst, wobei jedes aus der Mehrzahl von encodierten Signalen mit einem mit einem Signalquellort assoziierten eindeutigen pseudozufälligen Muster korreliert ist; und

ein Headend (303), konfiguriert zum Extrahieren des Signalquellortes aus dem empfangenen zusammengesetzten Signal;

wobei das Headend Folgendes umfasst:

einen Spektrumsanalysator (740), konfiguriert zum Digitalisieren des zusammengesetzten Signals und zum Produzieren eines digitalisierten Spektrums (745) von dem zusammengesetzten Signal;

einen Multiple-Code-Generator (760), konfiguriert zum Erzeugen einer Mehrzahl von Codes, wobei jeder aus der Mehrzahl von Codes mit jedem aus der Mehrzahl von encodierten Signalen korreliert ist;

einen Korrelator (770), konfiguriert zum Bestimmen einer Mehrzahl von Korrelationskoeffizienten, wobei jeder aus der Mehrzahl von Korrelationskoeffizienten eine Korrelation zwischen jedem aus der Mehrzahl von Codes und dem zusammengesetzten Signal anzeigt;

einen Taktgenerator (705), konfiguriert zum Erzeugen eines Synchronisationssignals (710), wobei das Synchronisationssignal zum Einleiten der Erzeugung der Mehrzahl von Codes konfiguriert ist;

einen Komparator (780), konfiguriert zum Vergleichen jedes aus der Mehrzahl von Korrelationskoeffizienten mit einem Schwellenwert zum Produzieren einer Mehrzahl von Ergebnissen, wobei jedes aus der Mehrzahl von Ergebnissen aus der Gruppe bestehend aus der Anwesenheit von Eingang und der Abwesenheit von Eingang ausgewählt ist;

eine Lookup-Tabelle, konfiguriert zum Identifizieren von Signalquellorten für jedes aus der Mehrzahl von Ergebnissen.

2. Quelle (335) in einem System zum Identifizieren von Eingang an Signalquellorten, wobei die Quelle eine eindeutige Kennung hat, wobei die Quelle Folgendes umfasst:

einen Taktempfänger (430), konfiguriert zum Empfangen eines Synchronisationssignals von einem Taktgenerator (705) an einem Headend-System nach Anspruch 1,
einen Code-Generator (450) zum Erzeugen eines Code, der beim Empfang des Synchronisationssignals ein pseudozufälliges Muster hat; und
einen Dämpfer (470), konfiguriert zum Encodieren eines Signals durch selektives Dämpfen von Zeitsegmenten des Signals gemäß dem pseudozufälligen Muster des Code, wobei sich das pseudozufällige Muster auf die eindeutige Kennung bezieht;
einen Sender zum Senden des encodierten Signals zum Headend.

3. Quelle nach Anspruch 2, wobei die Zeitsegmente des Signals eine feste Dauer haben.

4. Quelle nach Anspruch 2, wobei das Synchronisationssignal zum Bestimmen der Dauer der Zeitsegmente konfiguriert ist.

5. Quelle nach Anspruch 2, wobei das Headend das Headend nach Anspruch 1 umfasst.

6. System zum Identifizieren von Signalquellorten, wobei das System das Headend-System nach Anspruch 1 und eine Mehrzahl von Quellen nach einem der Ansprüche 2 bis 5 umfasst.

7. Verfahren zum Identifizieren von Eingang an Signalquellorten an einem Headend-System, wobei das Verfahren die folgenden Schritte beinhaltet:

Empfangen (1320), an einem Empfänger (725), eines zusammengesetzten Signals von einer Mehrzahl von Signalquellorten (315, 325, 335), wobei das zusammengesetzte Signal eine Mehrzahl von encodierten Signalen umfasst, wobei jedes aus der Mehrzahl von encodierten Signalen auf ein mit einem Signalquellort assoziiertes eindeutiges pseudozufälliges Muster korreliert ist; und
Extrahieren, an einem Headend (303), des Signalquellortes von dem empfangenen zusammengesetzten Signal, wobei das Verfahren ferner an dem Headend Folgendes beinhaltet:

Digitalisieren, mit einem Spektrumsanalysator (740), des zusammengesetzten Signals und Produzieren eines digitalisierten Spektrums von dem zusammengesetzten Signal;
Erzeugen (1330), mit einem Multiple-Code-Generator (760), einer Mehrzahl von Codes, wobei jeder aus der Mehrzahl von Codes mit jedem aus der Mehrzahl von encodierten Signalen korreliert ist;
Bestimmen, an einem Korrelator (770), einer Mehrzahl von Korrelationskoeffizienten, wobei jeder aus der Mehrzahl von Korrelationskoeffizienten eine Korrelation zwischen jedem aus der Mehrzahl von Codes und dem zusammengesetzten Signal anzeigt;
Erzeugen, an einem Taktgenerator (705), eines Synchronisationssignals (710), wobei das Synchronisationssignal zum Einleiten der Erzeugung der Mehrzahl von Codes konfiguriert ist;
Vergleichen jedes aus der Mehrzahl von Korrelationskoeffizienten mit einem Schwellenwert zum Produzieren einer Mehrzahl von Ergebnissen, wobei jedes aus der Mehrzahl von Ergebnissen aus einer Gruppe bestehend aus der Anwesenheit von Eingang und der Abwesenheit von Eingang ausgewählt ist;
Identifizieren (1350), in einer Lookup-Tabelle, von Signalquellorten für jedes aus der Mehrzahl von Ergebnissen.

8. Verfahren, implementiert an einer Quelle in einem System zum Identifizieren von Eingang an Signalquellorten, wobei die Quelle eine eindeutige Kennung hat, wobei das Verfahren die folgenden Schritte beinhaltet:

Empfangen (1230), an einem Taktempfänger, eines Synchronisationssignals von einem Taktgenerator an einem Headend-System nach Anspruch 1;

Erzeugen (1240) eines Code, der ein pseudozufälliges Muster umfasst, beim Empfang des Synchronisationssignals; und

Encodieren (1250) eines Signals mit einem Dämpfer durch selektives Dämpfen von Zeitsegmenten des Signals gemäß dem pseudozufälligen Muster des Code, wobei sich das pseudozufällige Muster auf die eindeutige Kennung bezieht;

Senden (1260) des encodierten Signals zum Headend.

9. Verfahren nach Anspruch 8, wobei die Zeitsegmente des Signals eine feste Dauer haben.

10. Verfahren nach Anspruch 8, das ferner die Benutzung des Synchronisationssignals zum Bestimmen der Dauer der Zeitsegmente beinhaltet.

11. Verfahren nach Anspruch 8, wobei das Headend das Verfahren nach Anspruch 7 implementiert.


**Revendications**

1. Système de tête de réseau servant à identifier un captage au niveau d'emplacements de sources de signaux, comportant :

un récepteur (725) configuré pour recevoir un signal composite en provenance d'une pluralité d'emplacements de sources de signaux (315, 325, 335), dans lequel le signal composite comporte une pluralité de signaux codés, dans lequel chaque signal codé de la pluralité de signaux codés est corrélé à un schéma pseudo-aléatoire unique associé à un emplacement de source de signaux ; et
une tête de réseau (303) configurée pour extraire l'emplacement de source de signaux en provenance du signal composite reçu ;
dans lequel la tête de réseau comporte :

un analyseur de spectre (740) configuré pour numériser le signal composite et produire un spectre numérisé (745) à partir du signal composite ;
un générateur de codes multiples (760) configuré pour générer une pluralité de codes, dans lequel chaque code de la pluralité de codes est corrélé à chaque signal codé de la pluralité de signaux codés ;
un corrélateur (770) configuré pour déterminer une pluralité de coefficients de corrélation, dans lequel chaque coefficient de corrélation de la pluralité de coefficients de corrélation indique une corrélation entre ledit chaque code de la pluralité de codes et le signal composite ;
un générateur d'horloge (705) configuré pour générer un signal de synchronisation (710), dans lequel le signal de synchronisation est configuré pour déclencher la génération de la pluralité de codes ;
un comparateur (780) configuré pour comparer chaque coefficient de corrélation de la pluralité de coefficients de corrélation par rapport à une valeur de seuil pour produire une pluralité de résultats, dans lequel chaque résultat de la pluralité de résultats est sélectionné dans un groupe constitué par la présence d'un captage et l'absence d'un captage ;
une table de consultation configurée pour identifier des emplacements de sources de signaux pour chaque résultat de la pluralité de résultats.

2. Source (335) dans un système servant à identifier un captage au niveau d'emplacements de sources de signaux, la source ayant un identifiant unique, la source comportant :

un récepteur d'horloge (430) configuré pour recevoir un signal de synchronisation en provenance d'un générateur d'horloge (705) au niveau d'un système de tête de réseau selon la revendication 1,
un générateur de codes (450) servant à générer un code comportant un schéma pseudo-aléatoire dès la réception du signal de synchronisation ; et
un atténuateur (470) configuré pour coder un signal en atténuant de manière sélective des segments temporels du signal en fonction du schéma pseudo-aléatoire du code, dans laquelle le schéma pseudo-aléatoire se rapporte à l'identifiant unique ;
un émetteur servant à transmettre le signal codé à la tête de réseau.

3. Source selon la revendication 2, dans laquelle les segments temporels du signal ont une durée fixe.

**4.** Source selon la revendication 2, dans laquelle le signal de synchronisation est configuré pour déterminer la durée des segments temporels.

**5.** Source selon la revendication 2 dans laquelle la tête de réseau comporte la tête de réseau selon la revendication 1.

**6.** Système servant à identifier des emplacements de sources de signaux, le système comportant le système de tête de réseau selon la revendication 1 et une pluralité de sources selon l'une quelconque des revendications 2 à 5.

**7.** Procédé servant à identifier un captage au niveau d'emplacements de sources de signaux au niveau d'un système de tête de réseau, le procédé comportant les étapes consistant à :

recevoir (1320) au niveau d'un récepteur (725) un signal composite en provenance d'une pluralité d'emplacements de sources de signaux (315, 325, 335), dans lequel le signal composite comporte une pluralité de signaux codés, dans lequel chaque signal codé de la pluralité de signaux codés est corrélé à un schéma pseudo-aléatoire unique associé à un emplacement de source de signaux ; et
extraire au niveau d'une tête de réseau (303) l'emplacement de source de signaux en provenance du signal composite reçu, le procédé comportant par ailleurs, au niveau de la tête de réseau, les étapes consistant à :

numériser au moyen d'un analyseur de spectre (740) le signal composite et produire un spectre numérisé à partir du signal composite ;
générer (1330) au moyen d'un générateur de codes multiples (760) une pluralité de codes, dans lequel chaque code de la pluralité de codes est corrélé à chaque signal codé de la pluralité de signaux codés ;
déterminer au niveau d'un corrélateur (770) une pluralité de coefficients de corrélation, dans lequel chaque coefficient de corrélation de la pluralité de coefficients de corrélation indique une corrélation entre ledit chaque code de la pluralité de codes et le signal composite ;
générer au niveau d'un générateur d'horloge (705) un signal de synchronisation (710), dans lequel le signal de synchronisation est configuré pour déclencher la génération de la pluralité de codes ;
comparer chaque coefficient de corrélation de la pluralité de coefficients de corrélation par rapport à une valeur de seuil pour produire une pluralité de résultats, dans lequel chaque résultat de la pluralité de résultats est sélectionné dans un groupe constitué par la présence d'un captage et l'absence d'un captage ;
identifier (1350) dans une table de consultation des emplacements de sources de signaux pour chaque résultat de la pluralité de résultats.

**8.** Procédé mis en oeuvre au niveau d'une source dans un système servant à identifier un captage au niveau d'emplacements de sources de signaux, la source ayant un identifiant unique, le procédé comportant les étapes consistant à :

recevoir (1230) au niveau d'un récepteur d'horloge un signal de synchronisation en provenance d'un générateur d'horloge au niveau d'un système de tête de réseau selon la revendication 1 ;
générer (1240) un code comportant un schéma pseudo-aléatoire dès la réception du signal de synchronisation ; et
coder (1250) un signal au moyen d'un atténuateur en atténuant de manière sélective des segments temporels du signal en fonction du schéma pseudo-aléatoire du code, dans lequel le schéma pseudo-aléatoire se rapporte à l'identifiant unique ;
transmettre (1260) le signal codé à la tête de réseau.

**9.** Procédé selon la revendication 8, dans lequel les segments temporels du signal ont une durée fixe.

**10.** Procédé selon la revendication 8, comportant par ailleurs l'étape consistant à utiliser le signal de synchronisation pour déterminer la durée des segments temporels.

**11.** Procédé selon la revendication 8 dans lequel la tête de réseau met en oeuvre le procédé selon la revendication 7.

FIG. 1

(PRIOR ART)

FIG. 2

(PRIOR ART)

EP 1 766 868 B1

FIG. 3

EP 1 766 868 B1

ENCODING
TAP (i)

335

490

SIGNAL IN
CODE ENVELOPE

480

INPUT
SIGNAL

430

SYNC/CLOCK
RECEIVER

440

CLOCK/
SYNC

450

CODE
GENERATOR

460

CODE(i)

470

VOLTAGE
CONTROLLED
ATTENUATOR

420

150

COAXIAL LINE(i)

350

# FIG. 4

VOLTAGE CONTROLLED ATTENUATOR

INPUT SIGNAL

490

SIGNAL IN CODE ENVELOPE

480

510 — R1

540

520 — R2

460

CODE (i)

530

550

470

FIG. 5

FIG. 6

HEADEND

710 — SYNC SIGNAL → 715 TRANSMITTER → 420 ENCODE COMMAND → TO ENCODING TAPS

307

SYNCHRONOUS CLOCK GENERATOR (705) — SYNC SIGNAL (710) → n-CODE GENERATOR (760) → CORRELATOR (770) → CRITERIA ENGINE (780)

765 775 785

745 DIGITIZED SPECTRUM → MEMORY (750) — 755

790 DISPLAY

SPECTRUM ANALYZER (740) ← RECEIVED SIGNAL (730) ← SIGNAL RECEIVER (725) ← FROM FIBER OPTIC NODE

305

STANDARD SIGNAL PROCESSING CIRCUITRY (735) ← RECEIVED SIGNAL (730)

303

FIG. 7

EP 1 766 868 B1

**750** MEMORY

**745**

M-WD
DIGITIZED
SPECTRUM

**745**

[M-WORD DIGITIZED SPECTRUM] =
[DS] =

$$\left[\quad DS\_WD\text{-}1 \quad DS\_WD\text{-}2 \quad \ldots \quad DS\_WD\text{-}i \quad \ldots \quad DS\_WD\text{-}M \quad \right]$$

[DS]

**755**

FIG. 8

EP 1 766 868 B1

—760

## n-CODE GENERATOR

—765

[CODE] =

| CODE(1)WD-1 | CODE(1)WD-2 | . . . | CODE(1)WD-i | . . . | CODE(1)WD-M |
| CODE(2)WD-1 | CODE(2)WD-2 | . . . | CODE(2)WD-i | . . . | CODE(2)WD-M |
| CODE(3)WD-1 | CODE(3)WD-2 | . . . | CODE(3)WD-i | . . . | CODE(3)WD-M |

.
.
.

| CODE(i)WD-1 | CODE(i)WD-2 | . . . | CODE(i)WD-i . . . | CODE(i)WD-M |
| CODE(i+1)WD-1 | CODE(i+1)WD-2 | . . . | CODE(i+1)WD-i | . . . | CODE(i+1)WD-M |

.
.
.

| CODE(n)WD-1 | CODE(n)WD-2 | . . . | CODE(n)WD-i | . . . | CODE(n)WD-M |

710—

CLOCK
SIGNAL

[CODE]

—765

# FIG. 9

EP 1 766 868 B1

755 → [DS]

765 → [CODE]

770

CORRELATOR

$$[\text{COR}]_n = \left[ \frac{\frac{1}{m}\sum_{j=1}^{m}\left(\left(RMS_{DS_j} - \mu_{RMS_{[DS]}}\right)\left(CODE_j - \mu_{[CODE]}\right)\right)}{\sigma_{[DS]}\sigma_{[CODE]}} \right]_n$$

1010

$$\begin{array}{c} COR(1) \\ COR(2) \\ COR(3) \\ \cdot \\ \cdot \\ \cdot \\ COR(i) \\ COR(i+1) \\ \cdot \\ \cdot \\ \cdot \\ COR(n) \end{array}$$

[COR] =
f([DS], [CODE])=

775

[COR]

775

FIG. 10

**CRITERIA ENGINE**

1110

**COMPARATOR**

COR(1)
COR(2)
COR(3)
·
·
·
COR(i)
COR(i+1)
·
·
·
COR(n)

775

**[COR]**

775

**THRESHOLD**

THRESHOLD

1140

1120

**CODE LOOK-UP TABLE**

1150

1170

**[RESULT]**

1150

| RESULT(1) | ◄►►► | TAP(1) |
| RESULT(2) | ◄►►► | TAP(2) |
| RESULT(3) | ◄►►► | TAP(3) |
| RESULT(i-1) | ◄►►► | TAP(i-1) |
| RESULT(i) | ◄►►► | TAP(i) |
| RESULT(i+1) | ◄►►► | TAP(i+1) |
| RESULT(n) | ◄►►► | TAP(n) |

**INGRESS INFO**

785

780

# FIG. 11

EP 1 766 868 B1

EP 1 766 868 B1

335

ENCODING TAP(i)

1210 START

1220 RECEIVE SIGNAL

1230 RECEIVE ENCODE COMMAND FROM
HEADEND
AT CLOCK RECEIVER

1240 GENERATE ORTHOGONAL CODES
HAVING PSEUDO-RANDOM
PATTERN IN RESPONSE TO RECEIVED
ENCODE COMMAND

1250 SELECTIVELY ATTENUATE SEGMENTS
OF RECEIVED SIGNAL USING
GENERATED CODE
TO PRODUCE ENCODED SIGNAL

1260 TRANSMIT
ENCODED SIGNAL
TO HEADEND

1270 END

# FIG. 12

EP 1 766 868 B1

```
                                              1310          ┌─────────────┐
                                                            │    START    │
                                                            └─────────────┘
                                                                   │
                                                                   ▼
                                                     ┌──────────────────────────┐
                                                     │   RECEIVE COMPOSITE SIGNAL │
                                            1320      │ COMPRISING SIGNALS TRANSMITTED │
                                                     │  FROM MULTIPLE ENCODING TAPS │
                                                     └──────────────────────────┘
                                                                   │
                                                                   ▼
                                                     ┌──────────────────────────┐
                                                     │  GENERATE ORTHOGONAL CODES │
                                            1330      │ HAVING PSEUDO-RANDOM PATTERN │
            303                                       └──────────────────────────┘
                                                                   │
       ┌─────────────────┐                                         ▼
       │                 │                           ┌──────────────────────────┐
       │    HEADEND      │                           │ SEPARATE COMPOSITE SIGNAL INTO │
       │                 │                  1340      │    COMPONENT SIGNALS USING  │
       └─────────────────┘                           │   GENERATED ORTHOGONAL CODES │
                                                     └──────────────────────────┘
                                                                   │
                                                                   ▼
                                                     ┌──────────────────────────┐
                                                     │ IDENTIFY SOURCE OF INGRESS FROM │
                                            1350      │   SEPARATED COMPONENT SIGNALS │
                                                     └──────────────────────────┘
                                                                   │
                                                                   ▼
                                            1360      ┌─────────────┐
                                                      │     END     │
                                                      └─────────────┘
```

# FIG. 13

FROM (FIG. 1330) — 1410

SELECT FIRST ORTHOGONAL CODE FROM GENERATED ORTHOGONAL CODES — 1420

DETERMINE CORRELATION BETWEEN RECEIVED COMPOSITE SIGNAL AND SELECTED ORTHOGONAL CODE — 1430

STORE CORRELATION COEFFICIENT FOR SELECTED ORTHOGONAL CODE — 1440

DETERMINE: ADDITIONAL ORTHOGONAL CODES? — 1450

NO → TO 1350 (FIG. 13) — 1470

YES → SELECT NEXT ORTHOGONAL CODE — 1460

CORRELATOR — 770

1340

FIG. 14

EP 1 766 868 B1

1350

1510 — FROM 1340
(FIG. 13)

1520 — COMPARE CORRELATION
COEFFICIENT OF ORTHOGONAL
CODES WITH PREDEFINED
THRESHOLD VALUE

780 — CRITERIA ENGINE

1530 — IDENTIFY TAP HAVING INGRESS FROM
RESULT OF COMPARISON

1540 — TO 1360
(FIG. 13)

# FIG. 15

FIG. 16

1520

1110

COMPARATOR

EP 1 766 868 B1

1610 → FROM 1510
(FIG. 15)

1620 — SELECT CORRELATION COEFFICIENT OF
FIRST ORTHOGONAL CODE

1630 — COMPARE SELECTED CORRELATION
COEFFICIENT WITH PREDEFINED
THRESHOLD

1640 — DETERMINE:
CORRELATION COEFFICIENT
GREATER THAN PREDEFINED
THRESHOLD?

YES

NO

1680 — SELECT CORRELATION
COEFFICIENT FOR NEXT
ORTHOGONAL CODE

1650 — SET
RESULT = 0
FOR SELECTED
ORTHOGONAL CODE

1660 — SET
RESULT = 1
FOR SELECTED
ORTHOGONAL CODE

1670 — DETERMINE:
ADDITIONAL CORRELATION
COEFFICIENTS?

YES

NO

1690 — TO 1720
(FIG. 17)

```
                                    ┌─────────────────┐
                              1530  │   FROM 1690     │
                                    │   (FIG. 16)     │
                                    └────────┬────────┘
                                             │ 1710
                                             ▼
                                    ┌─────────────────┐
                              1720  │ SELECT FIRST    │
                                    │ RESULT          │
                                    └────────┬────────┘
                                             │
                                             ▼
                              1730  ┌─────────────────────────┐
                                    │ DETERMINE TAP ASSOCIATED│
           ┌──────────┐             │ WITH SELECTED RESULT    │
           │ CODE     │             │ FROM LOOK-UP TABLE      │
      1120 │ LOOK-UP  │             └────────┬────────────────┘
           │ TABLE    │                      │
           └──────────┘        1750          │
                        ┌──────────────────┐ │
                        │ SELECT NEXT      │ │
                        │ RESULT           │ │
                        └────────┬─────────┘ │
                                 ▲           ▼
                           YES   │      1740 ◇ DETERMINE:
                                 └──────────  ADDITIONAL RESULTS?
                                                   │
                                                   │ NO
                                                   ▼ 1760
                                        ┌─────────────────┐
                                        │   TO 1540       │
                                        │   (FIG. 15)     │
                                        └─────────────────┘
```

# FIG. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020090909 A

**Non-patent literature cited in the description**

- A CDMA Based Bidirectional Communication System for Hybrid Fiber Coax CATV Networks. IEEE Transactions on Broadcasting. YVO L.C. DE JONG & CO, 01 June 1997, vol. 43